# EUROPEAN PATENT SPECIFICATION

(11) **EP 1 767 447 B1**
(45) Date of publication and mention of the grant of the patent: **25.06.2008**
(21) Application number: 06017277.2
(22) Date of filing: 18.08.2006
(51) Int. Cl.: B62K 21/02

(54) **Front fork for a bicycle**
Fahrrad-Vordergabel
Fourche avant de bicyclette

(30) Priority: 27.09.2005 CN 200510106448
(43) Date of publication of application: 28.03.2007
(73) Proprietor: Yuan Min An Enterprise Co., Ltd., Fong Yuan, Taichung (TW)
(72) Inventor: Yu, Kuo-Pin, Taichung Taiwan (TW)
(74) Representative: Becker Kurig Straus

(56) References cited:
- WO-A-99/15395
- US-A- 5 059 057
- US-B1- 6 352 276

## Description

### BACKGROUND OF THE INVENTION

### 1. Field of the Invention

The present invention relates to a front fork and more particularly to such a front fork for a bicycle, which has strong structure and light weight.

### 2. Description of the Related Art

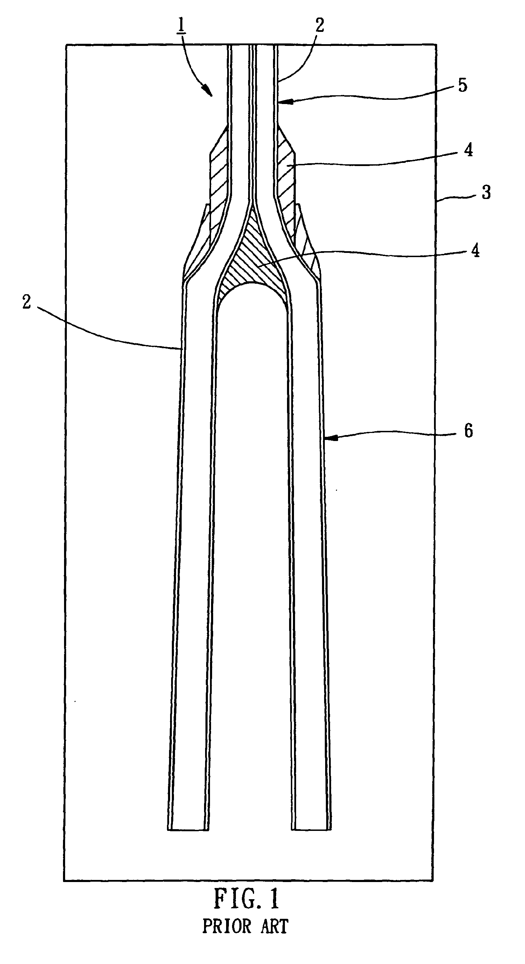

A conventional front fork for a bicycle is made of metal. Recently, the bicycle is developed towards reducing its weight and adopts fiber reinforced material. As shown in FIG 1, the front fork **1** is made of carbon fiber reinforced resin. The front fork **1** is manufactured by winding multiple layers of pre-pregs into two elongated tubes **2,** placing the elongated tubes **2** into a die **3** and winding pre-pregs **4** around predetermined position for enhancement, inflating the elongated tubes **2** to make the elongated tubes **2** abut on an inner wall of the die **3,** and curing the elongated tubes **2** and the pre-pregs **4** to form the front fork **1.**

The front fork **1** has an upright tube **5** and two arms **6** extending from a bottom of the upright tube **5.** As shown in FIG 1, the two arms **6** each consist of an elongated tube **2,** which does not has enough structure strength. It's easy to brake especially when the arms **6** encounter lateral stress. If the quantity of the pre-pregs used in the front fork **1** is increase for enhancing the structure strength, the weight of the product is unintentionally increased. Therefore, there is always a problem as how to reduce the weight of the front fork and increase the structure strength at the same time.

In WO 99/15395 there is disclosed a bicycle fork tubular pivot and a bicycle fork made as one piece with said pivot, wherein said pivot is made of a composite material and comprises at least one, but preferably two longitudinal internal reinforcing partitions being orthogonal to each other.

### SUMMARY OF THE INVENTION

The primary objective of the present invention is to provide a front fork for a bicycle, which has high structure strength and light weight.

The other objective of the present invention is to provide a front fork for a bicycle, which has an arm having high resistance to lateral stress.

The foregoing objectives of the present invention are attained by the front fork includes an upright tube and two arms all of which are made of fiber reinforced material. The two arms extend substantially parallel from a bottom of the upright tube. The two arms each have two inner tubes abutted together and an outer tube sleeved onto the two inner tubes. The abutted portions of the two inner tubes form a rib. Thus, the front fork has strong structure and light weight.

### BRIEF DESCRIPTION OF THE DRAWINGS

FIG 1 is a sectional view of a conventional front fork.
FIG 2 is a perspective view of a first preferred embodiment of the present invention.
FIG 3 is a sectional view along the 3-3 line in FIG 2.
FIG 4 is a sectional view along the 4-4 line in FIG 2.
FIG 5 is a sectional view of a second preferred embodiment of the present invention.

### DETAILED DESCRIPTION OF THE INVENTION

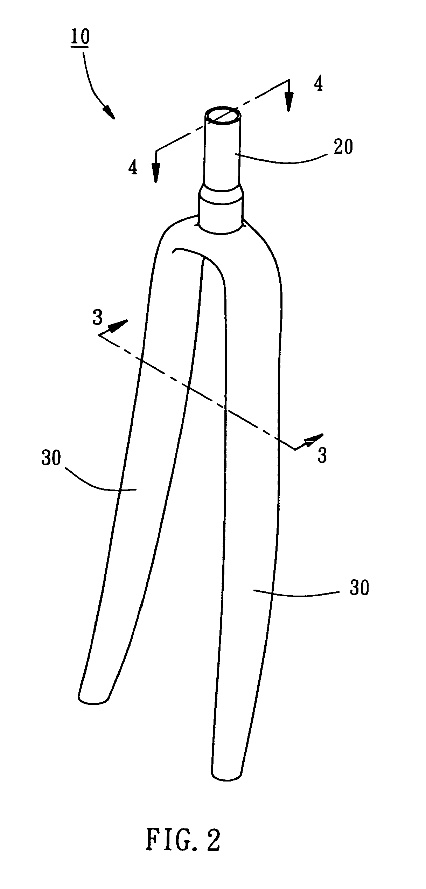

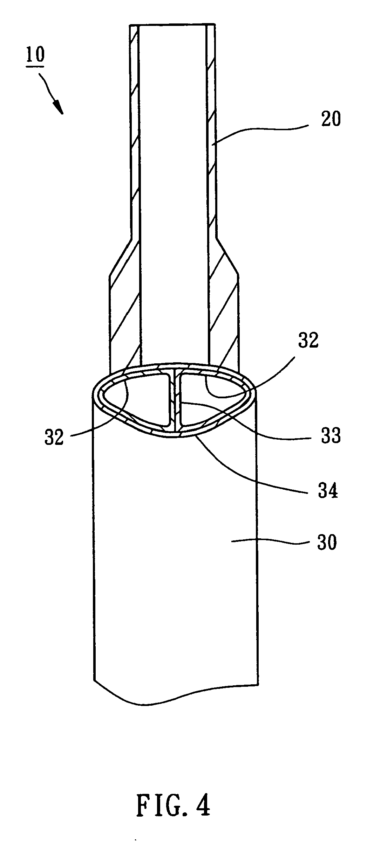

Referring to FIGS. 2-4, a front fork 10 for a bicycle in accordance with the first preferred embodiment of the present invention is shown comprising an upright tube **20** and two arms **30** all of which are made of fiber reinforced resin material. The fiber can adopt but not restrict to carbon fiber, glass fiber, boron fiber or Kevlar^{®} fiber. The resin can adopt thermosetting resin or thermoplastic resin.

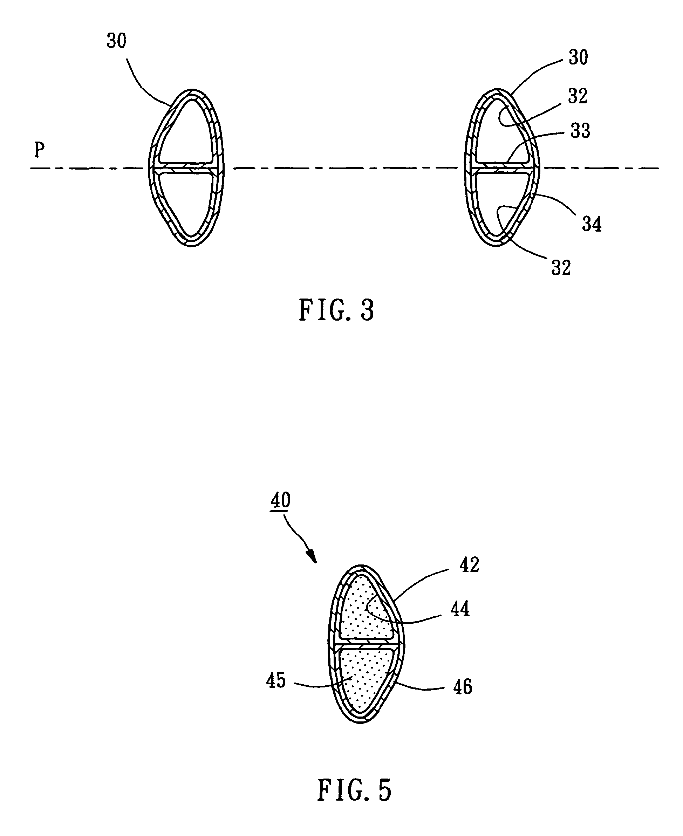

The upright tube **20** is a straight tube for connecting with a steering handle (not shown). The two arms **30,** which are disposed at a plane **P,** extend substantially parallel from a bottom of the upright tube **20.** As shown in FIGS. 3-4, the two arms **30** each have two inner tubes **32** abutted together and an outer tube **34** sleeved onto the two inner tubes **32.** The outer tube **34** and the two inner tubes **32** are closely contacted without a gap therebetween. The abutted portions of the two inner tube **32** form a rib **33** substantially parallel to the plane **P.**

The arms **30** are manufactured by abutting two inner tubes **32** together, winding multiple layers of pre-pregs around the two inner tubes **32** to form the outer tube **34,** connecting the middle part of the combination of the tubes **32, 34** with the bottom of the upright tube **20,** placing the combination of the tubes **32, 34** into a die (not shown), inflating the inner tubes **32** by high pressure air to make the outer tubes **34** expand and abut on an inner wall of the die, and curing the combination of the tubes **32, 34.**

The structure strength of the arms **30** is enhanced remarkably since the arms **30** each have a rib **33** therein. The arms **30** can bear great lateral stress particularly since the ribs **33** are parallel to the plane **P.** Therefore, the front fork **10** of the present invention can improve the drawback of the conventional structure and achieve the objectives of the present invention. Besides, under the premise that the structure strength of the front fork **10** is enough, the quantity of the pre-pregs used in the front fork **10** can be reduced such that the weight of the front fork **10** can be decreased.

As shown in FIG. 5, the arm **42** of front fork **40** for a bicycle in accordance with the second preferred embodiment of the present invention has two inner tubes **44** and an outer tube **46.** The two inner tubes **44** are filled with foam material in advance. A foamed core **45** is formed by the foam material by heating. The foamed core **45** expands and makes the outer tube **46** abut on the inner wall of the die (not shown). The front fork **40** is cured after a predetermined period of time and the foamed core **45** is filled in the inside of the two inner tubes **44.**

In practice, the foam material and high pressure air can be used alone or cooperatively to make the outer tube abut on the inner wall of the die. The quantity or the position of the rib can be changed according to user's demand. For example, the arm, which has three inner tubes, has two ribs formed between the three inner tubes. Although particular embodiments of the invention have been described in detail for purposes of illustration, various modifications and enhancements may be made without departing from the scope of the invention defined by the claims.

## Claims

1. A front fork for a bicycle, comprising an upright tube (20) made of fiber reinforced material, and two arms (30) made of fiber reinforced material and extending substantially parallel from a bottom of the upright tube (20), **characterized in that** the two arms (30) each have two inner tubes (32) abutted together and an outer tube (34) sleeved onto the two inner tubes (32), and wherein the abutted portions of the two inner tubes (32) form a rib (33).

2. The front fork for a bicycle as claimed in claim 1, wherein the two arms (30) are disposed substantially at a same plane (P) and the ribs (33) are substantially parallel to the plane.

3. The front fork for a bicycle as claimed in claim 1, wherein the outer tube (34) and the two inner tubes (32) are closely contacted without a gap therebetween.

4. The front fork for a bicycle as claimed in claim 1, further comprising a foamed core (45) filled in an inside of one of the inner tubes (32).

## Patentansprüche

1. Vordergabel für ein Fahrrad, umfassend, ein aus faserverstärktem Material hergestelltes, aufrecht stehendes Rohr (20) und zwei aus faserverstärktem Material hergestellte und sich im Wesentlichen von einem unteren Ende des aufrecht stehenden Rohres (20) parallel erstreckende Arme (30), **dadurch gekennzeichnet, dass** die zwei Arme (30) jeweils zwei aneinandergrenzende Innenrohre (32) und ein äußeres Rohr (34) aufweisen, das auf die zwei Innenrohre (32) gewickelt ist, und worin die aneinandergrenzenden Bereiche der zwei Innenrohre (32) eine Rippe (33) ausbilden.

2. Vordergabel für ein Fahrrad nach Anspruch 1, worin die zwei Arme (30) im Wesentlichen auf einer gleichen Ebene (P) angeordnet sind und die Rippen (33) im Wesentlichen parallel zu der Ebene sind.

3. Vordergabel für ein Fahrrad nach Anspruch 1, worin das äußere Rohr (34) und die zwei Innenrohre (32) ohne eine dazwischen befindliche Lücke nahe in Kontakt stehen.

4. Vordergabel für ein Fahrrad nach Anspruch 1 weiter umfassend, einen geschäumten Kern (45), der in eine Innenseite von einem der Innenrohre (32) gefüllt ist.

## Revendications

1. Une fourche avant pour une bicyclette comprenant un tube droit (20) fait de matériau en fibre renforcé et deux bras (30) fait de matériau en fibre renforcé et s'étendant sensiblement parallèlement à partir du bas du tube droit (20), **caractérisé en ce que** les deux bras (30) comportent chacun deux tubes internes (32) aboutés ensemble et un tube externe (34) gainé autour des deux tubes internes (32) et dans laquelle les portions aboutées ensemble des deux tubes internes (32) forment une nervure (33).

2. La fourche avant pour une bicyclette telle que revendiquée dans la revendication 1 dans laquelle les deux bras (30) sont disposés sensiblement dans un même plan (P) et les nervures (33) sont sensiblement parallèles au plan.

3. La fourche avant pour une bicyclette telle que revendiquée dans la revendication 1 dans laquelle le tube externe (34) et les deux tubes internes (32) sont étroitement contactés, sans un espace entre eux.

4. La fourche avant pour une bicyclette telle que revendiquée dans la revendication 1 comprenant en outre un noyau en mousse (45) remplissant un espace intérieur de l'un des tubes internes (32).
